# NEW EUROPEAN PATENT SPECIFICATION

(11) **EP 1 199 947 B2**
(45) Date of publication and mention of the opposition decision: **30.09.2009**
(45) Mention of the grant of the patent: 24.11.2004
(21) Application number: 00942569.5
(22) Date of filing: 12.07.2000
(51) Int. Cl.: A23K 1/16, A23K 1/18

(54) **FEED FOR SALMONIDS**
SALMONIDENFUTTER
ALIMENT POUR SALMONIDES

(30) Priority: 28.07.1999 NO 993678
(43) Date of publication of application: 02.05.2002
(73) Proprietor: Biomar Group, 7330 Brande (DK)
(72) Inventor: ARNESEN, Petter, N-1178 Oslo (NO); NORDRUM, Sigve, N-7562 Hundhamaren (NO); SMULLEN, Richard, Cupar, Fife KY 154NJ (GB); CAMPBELL, Patrick, East Lothian EH41 3EY (GB); ALDERSON, Richard, Fife KY11 5YU (GB)
(74) Representative: Wallace, Sheila Jane
(86) International application number: PCT/NO2000/000237
(87) International publication number: WO 2001/006868

(56) References cited:
- WO-A1-95/10294
- US-A- 5 866 537
- DATABASE WPI Week 198626, Derwent Publications Ltd., London, GB; AN 1986-164998, XP002965676 & JP 61 096 959 A (TOKURA KK) 15 May 1986 & PATENT ABSTRACTS OF JAPAN & JP 61 096 959 A 15 May 1986
- DATABASE WPI Week 197612, Derwent Publications Ltd., London, GB; AN 1976-21421X, XP002965677 & JP 51 013 696 A (NI SUISAN KAISHA LTD) 03 February 1976
- DATABASE WPI Week 199515, Derwent Publications Ltd., London, GB; AN 1995-109442, XP002965678 & JP 7 031 380 A (DENRYOKU CHUO KENKYUSHO) 03 February 1995 & PATENT ABSTRACTS OF JAPAN & JP 07 031 380 A (CENTRAL RES INST OF ELECTRIC POWER IND) 03 February 1995
- DATABASE WPI Week 199734, Derwent Publications Ltd., London, GB; AN 1997-371237, XP002965679 & RU 2 071 316 C1 (BISL CO LTD) 10 January 1997
- DATABASE WPI Derwent Publications Ltd., London, GB; AN 1986-315431, XP002965680 & JP 61 233 622 A (RIKEN VITAMIN CO) 17 October 1986 & PATENT ABSTRACTS OF JAPAN & JP 61 233 622 A (RIKEN VITAMIN CO LTD) 17 October 1986
- DARCY D. QUAM ET AL.: 'Histidine requirement of kittens for growth, haematopoiesis and prevention of cataracts' BRITISH JOURNAL OF NUTRITION vol. 58, 1987, pages 521 - 532, XP000985841

## Description

The present invention relates to feed for salmonids, comprising fat, proteins, including amino acids, minerals, vitamins etc. for reduction of cataracts.

Over the last 5-6 years there has been an increase in the incidence of cataracts in salmon farming. Serious outbreaks of the disease have been observed in Norway, United Kingdom and Ireland. Cataract may be defined as opacification of the lens and/or lens capsule. It is common to distinguish between Osmotic cataract and Irreversible cataract. The former appears as a poorly demarcated opacity around the anterior. vertical lens suture and these changes may disappear if osmotic balance is re-established, provided that the changes have not been too extended or long lasting. Irreversible cataract is a common cause of reduced vision or blindness in farmed fish as well as in other species. As salmon are dependent on vision for normal food intake, even moderate cataract changes will affect the growth rate of the fish.

It is not known what causes the cataracts that are observed in modern salmon farming. However, reports in the literature describe some known causes of cataracts and these have been related to nutritional, environmental and physical factors. Deficiencies of specific nutrients such as methionine, cysteine, tryptophan, riboflavin (Vitamin B₂), vitamin A and zinc have previously been discussed as possible causes of cataracts. Such deficiencies were more common in the early days of fish farming, but may also occur during modem intensive farming conditions. In periods with rapid growth it is also possible that the lens is not able to absorb sufficient amounts of nutrients needed for normal lens growth, metabolism and protection. Another cause might be parasitic invasion. Although mainly observed in farmed trout, it may also occur in other farmed species. Toxic factors, for instance specific anti-parasitic treatments have been described as causes of cataracts. Changes in water quality may also lead to cataracts. Exposure to sunlight has been reported to cause cataracts in trout. Thus the causes of cataracts in farmed fish are rather difficult to determine and may vary depending on several factors as indicated above. To recommend special treatment, change of operating conditions during farming or choice of special feeds has therefore been a problem.

Cataracts is a well known problem for several species and also for humans and in the literature several treatments of the disease have been discussed and recommended. Thus, it is generally known from Russian Patent No. 2,071,316 to treat human and animal cataracts with eye drops containing a beta-alanyl-L-histidine.

JP7031380 discloses a feedstuff for flat fishes containing 0.5-2 grams of histidine. US-A-5866537 discloses compositions containing carnosine and zinc. A feed for the prevention of cataracts in kittens, containing 0.1-0.45 wt% histidine is disclosed in the British Journal of Nutrition, vol. 12, 1987, pages 521-532.

Fish feed contains protein comprising amino acids, including histidine. The amino acid profile may vary and the amino acid requirement for Atlantic salmon has not been established. Essential amino acids must, however, be present for normal growth according to the Handbook of Nutrient Requirements of Finfish, Robert P. Wilson, CRC Press, Boca Raton Ann Arbor Boston London. According to "Nutrient Requirements of Fish, Commitee on Animal Nutrition, Board of Agriculture, National Research Council, National Academy Press, Washington D.C. 1993, the requirement of amino acids is considered to be about the same for Atlantic salmon as for Pacific salmon and is stated on page 63 to be 0.7 weight% histidine of the feed for rainbow trout and 0.61 weight% histidine for Pacific salmon. In commercial diets histidine levels of 0.8-1.0 % have been observed. As amino acids are natural components of fish feed, there are also several patent publications mentioning the level of amino acids, including histidine, in their feed. However, none of these mention treatment of eye diseases by balancing the amino acid or histidine content of the feed. Of such publications the following are referred to: JP 61096959 describing food for rearing fish obtained by injecting liquid nutrients, e.g. vitamins, minerals, organic acids and amino acids comprising histidine, to raw or thawed fish and JP 51013696 relating to Fish breeding feed preparation. 0.5% lysine or its salt, 0.2% of histidine or its salt and 0.4-4% arginine or its salt were added to the feed raw material. The resulting product can be used in the form of powder, granules and pellets. Growth of tunny. horse mackerel and sea bream is remarkable. Handling of the feed is simple compared to live feed. Storage of the feed is easy.

The main object of the invention was to identify nutrient elements that could be used to reduce occurrence of cataracts in farmed fish and to develop a feed containing such elements.

In their search for a solution to the problem the inventors started by studying the history of fish farming and the occurrence of various diseases and their possible causes. Physical conditions, including stress conditions, may cause diseases or increase their occurrence. Changes in dietary compositions were also examined. The increasing incidence of cataracts in salmon farming in European countries has by some been related to the omission of blood meal in commercial diets, from 1995 in Norway. Some feed producers omitted blood meal from their feed already in 1990-1991 without observing any apparent problem. Blood contains significant amounts of iron, zinc and amino acids. Following the incidence of Creutzfelt-Jacob disease and possible relationship to BSE in cattle, use of by-products from mammalian sources in breeding have been debated internationally. This has led to a general uncertainty in the fish farming industry and since blood meal may not be accepted as a feed ingredient in the future, it is essential to examine whether the omission of blood meal from the fish feed may have had negative effects. Experiments were therefore started to study the effects on the fish and in particular on the occurrence of cataracts as a function of type of feed. Tests to investigate the effect on cataracts of the addition of blood meal to the feed were performed. The first experiment with adding blood meal to the feed gave no clear results on cataract occurrence, but then a series of tests were started to more thoroughly study the possible effect of the feed containing relatively high contents of blood meal. These experiments did not show any significant effect on growth, but the cataract incidents were significantly reduced. The obvious difference between blood meal and fish meal is the amino acid profile. Among the most essential amino acids, the histidine content is substantially higher in blood meal (average 5.65%) than in fish meal (average 1.78) according to Degauss data base (ammoniate 1.0) for "The amino acid composition of feed ingredients". Further experiments were therefore conducted focusing on the histidine content of the feed and the possible effect thereof on occurrence of cataracts. It was then found that normal histidine content in the feed (about 0.8%) did not have any effect on the cataract occurrence, but when about twice as much histidine was used in the feed the occurrence of cataracts was significantly reduced. Already at a histidine content of 1.17% the % eyes with cataracts were less than half of that for a histidine level of about 1%. The effects of other amino acids seemed to be negligible.

In view of the recommendations for treatment of cataracts for human beings that the histidine should be administered by eye drops, it is quite surprising that the observed effect on cataracts of fish can be reduced from about 55% to 5% by just increasing the histidine content in the feed to about twice the normal level. None of the publications stating a certain amino acid and histidine content in the feed in order to obtain higher growth indicate anything about these components on cataracts. On the contrary, one of the possible causes suggested for cataracts is intensive farming conditions such as use of growth stimulants and according to the publications relating to use of amino acids and histidine the claimed effect is increasing growth. Accordingly, addition of histidine to the feed as stated in these publications should lead away from increasing the histidine content in the fish feed in order to reduce the occurrence of cataracts. In spite of this, the experiments with addition of histidine to feed for salmonids were continued in order to possibly verify the positive indications of the initial experiments. It was then found that by increasing the histidine content of the total feed substantially the cataract occurrence could be markedly reduced. The upper limit for the histidine level seemed to be rather a practical one, but should be 2 weight%. Histidine within the meaning of the invention encompasses each of D-histidine and L-histidine, racemic or non-racemic mixtures of histidine or salts thereof.

The effects on zinc and iron content in the feed seemed to be of minor importance as long as the level for these components were within normal levels for commercial feeds.
- Figure 1: shows the % eyes with cataracts as function of diet and dietary histidine level.
- Figure 2: shows cataract severity as % of the lens area covered by cataract as function of diet and dietary histidine level.

The main features of the invention are that the feed for salmonids should contain more than 1.15% and no more than 2 wt% histidine, or corresponding amounts of histidine pre-cursors or histidine derivatives such as anserine, carnosine or ergothioneine, of the total weight of the feed in order to obtain a reduction of cataracts. According to the invention there is therefore provided feed comprising standard feed ingredients characterised in that the feed contains more than 1.15 wt% and no more than 2 wt%, based on the total weight of the feed, of histidine or corresponding amounts of histidine pre-cursors or histidine derivatives for use in reducing cataracts in salmonids. The most preferred content of histidine in the feed will be 1.3-2.0% of the total feed. It is also preferred that the feed contains more than 120 mg zinc/kg feed.

The invention is further explained and elucidated in the examples and the figures.

The scoring system employed for assessing degree of cataract in Examples 1 and 2 was as follows:
- 0: clear lens
- 1: minor part of the lens affected (<10%)
- 2: minor to medium part of the lens affected (10-50%)
- 3: major part of the lens affected (50-75%)
- 4: completely opaque lens

Total cataract score for each fish was noted as the combined score for both eyes (i.e. 0-8). In some of the examples the accumulated score for each group of fish is shown (i.e. combined cataract score for each fish x number of fish affected).

In Example 3 the diameter of the cataract in each eye was measured to the nearest 0.1 mm while observing the eye, illuminated from the side with a fibre optic light source, using a binocular microscope. From this measurement, the area of the cataract was determined by calculation. At the same time, the length of each fish was measured from the nose to the fork of the tail. This body length measurement was used to calculate the total area of the upper hemisphere of the lens that would be visible if the lens had been removed from the eye. The area of the upper hemisphere of the lens had previously been determined with a separate sample of fish to be related to fish length by the relationship.:
Area (mm²) =12.56*(1.32+0.032*(fish length in cm))².

Using the area of the cataract, calculated from the measured cataract diameter, and the area of the excised lens, calculated from the body length of the fish sampled, the cataract severity was expressed as a % of the whole lens area that was affected. Between 35 and 50 fish were examined from each replicate tank on each dietary treatment, the incidence of eyes with cataract was noted, and the mean value for the size of the cataract in those affected was calculated to give the cataract score as cataract %.

### Example 1

Atlantic salmon with initial mean weight of 40-50 grams were placed in fresh water tanks, 500 fish in each. Three different diets were used during the experiment. Control diet, positive control (PC) being a feed with added blood meal and new diet (ND) being a feed according to the invention. Feeding was in excess of requirement with automatic feeders. A total number of 180 fish were sampled from each dietary treatment. In Table 1 the chemical compositions of the diets are shown and in Table 2 the cataract scores per dietary treatment are shown.

**Table 1**

| Diets | Control | PC | ND |
|---|---|---|---|
| Protein (%) | 46.2 | 46.6 | 47.3 |
| Fat | 19.7 | 19.1 | 19.8 |
| | | | |

| Minerals (mg/kg) | | | |
|---|---|---|---|
| Iron | 78 | 261 | 257 |
| Zinc | 136 | 160 | 450 |
| | | | |

| Amino Acids (% of diet) | | | |
|---|---|---|---|
| Histidine | 0.9 | 1.2 | 1.5 |
| Methionine | 1.1 | 1.0 | 1.1 |
| H-Cystine | 0.4 | 0.4 | 0.4 |
| Proline | 1.6 | 1.6 | 1.5 |
| Lysine | 3.1 | 3.1 | 3.1 |

**Table 2**

| Diet | No. Examined | No. Affected | Cataract score |
|---|---|---|---|
| Control | 180 | 94 | 192 |
| PC | 180 | 72 | 95 |
| ND | 180 | 74 | 104 |

From this experiment it was found that there was no significant effect of diet on number of affected fish, but a significant effect of diet on cataract score.

### Example 2

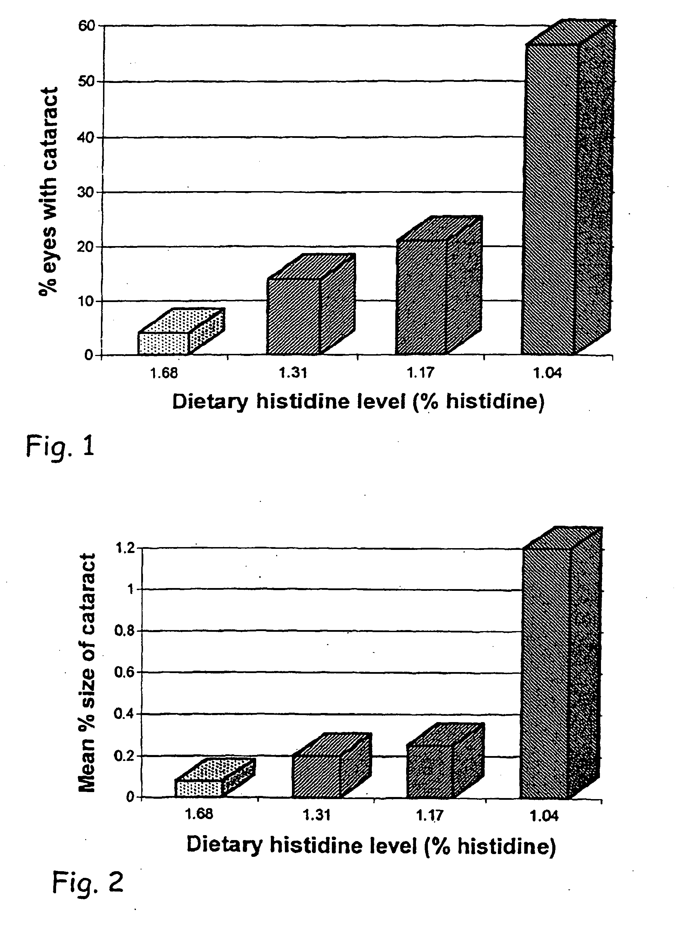

This example shows the results from a series of experiments performed with different diets over a period of four months. Atlantic salmon with an average initial weight of 90 grams were used. 12 cages (12x12 meters) were applied, each containing 3000 fish. The fish were hand fed in excess of calculated requirements. The chemical composition of the diets are shown in Table 3 and the cataract frequency at each screening (% of fish with cataracts) is shown in Figure 1.

The diets used were: PC, positive control containing blood meal; NC,. negative control; ND, a diet according to the invention; OB, a commercial feed. In Table 3 two sets of diets used in each group for the duration of the experiment are shown (PC1, ND1, NC1 and OB1 during the first part of the experiment and PC2, ND2, NC2 and BO2 during the second part). In Table 4 the cumulative cataract score (number of fish affected x cataract score) is shown.

**Table 3**

| Diet | PC1 | ND1 | NC1 | OB1 | PC2 | ND2 | NC2 | OB1 |
|---|---|---|---|---|---|---|---|---|
| Protein (%) | 45.9 | 45.1 | 46.6 | 45.5 | 38.1 | 41.0 | 42.1 | 41.9 |
| Fat (%) | 25.6 | 25.7 | 26.0 | 27.1 | 35.2 | 30.7 | 30.7 | 30.1 |
| GE(MJ/kg) | 20.9 | 20.9 | 21.3 | 21.3 | 22.9 | 21.8 | 22.1 | 21.8 |
| | | | | | | | | |

| Minerals (mg/kg) | | | | | | | | |
|---|---|---|---|---|---|---|---|---|
| Iron | 255 | 144 | 97 | 156 | 391 | 228 | 109 | 133 |
| Zinc | 147 | 268 | 204 | 222 | 124 | 173 | 149 | 178 |
| | | | | | | | | |

| Amino Acids (% of diet) | | | | | | | | |
|---|---|---|---|---|---|---|---|---|
| Histidine | 1.3 | 1.0 | 0.8 | 0.9 | 1.0 | 1.3 | 0.8 | 0.8 |
| Methionine | 0.9 | 1.0 | 1.5 | 1.0 | 1.1 | 1.0 | 1.2 | 0.9 |
| H-Cystine | 0.4 | 0.4 | 0.7 | 0.5 | 0.4 | 0.4 | 0.4 | 0.5 |
| Proline | 1.9 | 1.8 | 1.8 | 2.3 | 1.7 | 1.7 | 1.7 | 2.2 |
| Lysine | 2.9 | 2.9 | 3.0 | 2.4 | 2.3 | 2.5 | 2.6 | 2.1 |

**Table 4**

| Diet | June | July | August | September |
|---|---|---|---|---|
| PC | 20 | 35 | 37 | 51 |
| ND | 17 | 30 | 47 | 60 |
| OB | 21 | 44 | 59 | 70 |
| NC | 23 | 47 | 70 | 83 |

In June 60 fish were sampled from the PC and ND groups, 90 from OB and NC.
In July 60 fish were sampled from the PC group, 90 from the other groups.
In August 90 fish were sampled from each dietary treatment.
In September 180 fish were sampled from ND, OB and NC, 120 from PC.

From this example it is clear that the cataract occurrence is rather complicated and varies not just by the feed used but also with the age of the fish and other conditions during the farming period. However, the experiments clearly show that when the histidine content of the feed is relatively high, the cataract occurrence is at its lowest.

### Example 3

Five diets were used during this experiment. Diet 1 had high inclusions of bovine blood meal and corresponding high histidine level. Diet 2 was a commercial diet with added blood meal. Diet 3 was one of the diets within the invention. The amino acid concentrations, in % of the dietary protein, for the various diets are shown in Table 5. The results of the experiments, based on dietary histidine content (%), are shown in Figures 1 and 2.

**Table 5**

| Amino Acids | Diet 1 | Diet 2 | Diet 3 | Diet 4 |
|---|---|---|---|---|
| Cysteine | 0.97 | 1.05 | 1.04 | 1.05 |
| Methionine | 2.14 | 2.03 | 2.47 | 3.06 |
| Aspartic Acid | 8.27 | 8.92 | 8.91 | 8.98 |
| Threonine | 3.58 | 3.64 | 3.79 | 3.83 |
| Serine | 4.09 | 4.45 | 4.30 | 4.52 |
| Glutamic Acid | 13.14 | 14.92 | 13.96 | 14.24 |
| Proline | 4.76 | 4.69 | 4.41 | 4.22 |
| Glycine | 6.09 | 5.19 | 5.69 | 5.67 |
| Alanine | 6.38 | 5.74 | 5.89 | 5.89 |
| Valine | 5.41 | 5.67 | 5.05 | 4.91 |
| Isoleucine | 3.63 | 3.68 | 4.34 | 4.24 |
| Leucine | 8.16 | 7.96 | 7.47 | 7.41 |
| Phenylalanine | 4.35 | 4.67 | 4.25 | 4.17 |
| Histidine | 3.36 | 3.00 | 2.58 | 2.26 |
| Lysine | 6.60 | 6.91 | 7.01 | 7.07 |
| Arginine | 5.32 | 5.54 | 5.80 | 5.83 |
| % histidine in diet | 1.68 | 1.31 | 1.17 | 1.04 |
| % protein in diet | 49.9 | 43.71 | 45.36 | 46.00 |

From Figures 1 and 2 it can be seen that there is a substantial difference between feed containing about 1% and 1.17% histidine with regard to occurrence of cataracts. When the histidine content of the feed is increased to 1.68, the occurrence of cataracts is reduced to about 5% contrary to about 56% when the feed contains only 1.04 % histidine.

Thus the inventors have been able to arrive at a new feed which can be used to reduce cataracts in salmonids under conditions which would result in substantial occurrence of cataracts if the fish was fed with conventional feed. The new feed does not reduce the growth of the fish compared to conventional feed.

## Claims

1. Feed comprising standard feed ingredients **characterised in that** the feed contains more than 1.15 wt% and no more than 2 wt%, based on the total weight of the feed, of histidine or corresponding amounts of histidine pre-cursors or histidine derivatives, for use in reducing cataracts in salmonids.

2. A feed according to claim 1, **characterised in that** the feed contains more than 120 mg zinc/kg feed.

3. A feed according to claim 1 or claim 2 wherein the histidine derivative is anserine, carnosine or ergothioneine.

4. A feed according to any preceding claim wherein the standard feed ingredients comprise fat, protein, including amino acids, minerals and vitamins.

5. A feed according to any preceding claim wherein the feed contains 1.3 to 2.0 wt% histidine.

6. Use of more than 1.15 wt% and no more than 2 wt% histidine or corresponding amounts of histidine pre-cursors or histidine derivatives for the manufacture of a medicament comprising standard feed ingredients, for reducing cataracts in salmonids.

## Patentansprüche

1. Futter, umfassend übliche Futterbestandteile, **dadurch gekennzeichnet, dass** das Futter auf der Basis des Futtergesamtgewichts mehr als 1,15 Gew.-% und nicht mehr als 2 Gew.-% Histidin oder entsprechende Mengen an Histidin-Vorläufern oder Histidin-Derivaten enthält, zur Verwendung bei der Reduzierung von Katarakten bei Salmoniden.

2. Futter nach Anspruch 1, **dadurch gekennzeichnet, dass** das Futter mehr als 120 mg Zink/kg Futter enthält.

3. Futter nach Anspruch 1 oder Anspruch 2, wobei das Histidin-Derivat Anserin, Carnosin oder Ergothionein ist.

4. Futter nach einem der vorherigen Ansprüche, wobei die üblichen Futterbestandteile Fett, Protein, einschließlich Aminosäuren, Mineralien und Vitamine umfassen.

5. Futter nach einem der vorherigen Ansprüche, wobei das Futter 1,3 bis 2,0 Gew.-% Histidin enthält.

6. Verwendung von mehr als 1,15 Gew.-% und nicht mehr als 2 Gew.-% Histidin oder entsprechenden Mengen von Histidin-Vorläufern oder Histidin-Derivaten zur Herstellung eines Medikamentes, das übliche Futterbestandteile enthält, zur Reduzierung von Katarakten bei Salmoniden.

## Revendications

1. Aliment comprenant des ingrédients standards pour aliments, **caractérisé en ce que** l'aliment contient plus de 1,15 % en poids et pas plus de 2 % en poids (sur la base du poids total de l'aliment) d'histidine ou des quantités correspondantes de précurseurs ou de dérivés de l'histidine, pour une utilisation dans la réduction des cataractes chez les salmonidés.

2. Un aliment selon la revendication 1, **caractérisé en ce que** l'aliment contient plus de 120 mg de zinc/kg d'aliment.

3. Un aliment selon la revendication 1 ou la revendication 2, le dérivé de l'histidine étant l'ansérine, la carnosine ou l'ergothionéine.

4. Un aliment selon n'importe laquelle des revendications précédentes, les ingrédients standard comprenant matières grasses, protéines, y compris acides aminés, minéraux et vitamines.

5. Un aliment selon n'importe laquelle des revendications précédentes contenant 1,3 à 2,0 % en poids d'histidine.

6. L'utilisation de plus de 1,15 % en poids et pas plus de 2 % en poids d'histidine ou de quantités correspondantes de précurseurs ou de dérivés de l'histidine pour la fabrication d'un médicament comprenant des ingrédients standard pour aliment destiné à réduire les cataractes chez les salmonidés.
